# EUROPÄISCHE PATENTANMELDUNG

(11) **EP 1 102 239 A1**
(43) Veröffentlichungstag der Anmeldung: **23.05.2001**
(21) Anmeldenummer: 99122889.1
(22) Anmeldetag: 18.11.1999
(51) Int. Cl.: G10L 15/06

(54) **Kodierung und Trainieren des Vokabulars für die Spracherkennung**

(71) Anmelder: TELEFONAKTIEBOLAGET LM ERICSSON (publ), 126 25 Stockholm (SE)
(72) Erfinder: Dobler, Stefan, 91077 Neunkirchen am Brand (DE); Hellwig, Karl, 97539 Wonfurt (DE)
(74) Vertreter: Mohsler, Gabriele

(57) **Zusammenfassung**

Die Erfindung betrifft ein Verfahren, eine Vorrichtung und ein Computerprogramm zur Ermittlung eines Wortes aus einem Sprachsignal. Insbesondere betrifft die Erfindung ein Verfahren, eine Vorrichtung und ein Computerprogramm, bei dem die zu ermittelnden Worte neu aufgenommen werden können. Sowohl die Wortermittlung als auch das Training neuer Worte erfolgt mit Hilfe von Codebuchmerkmalsvektoren, die in einem Codebuchspeicher CS fabrikmäßig vorgegeben sind. Digitalisierte Worte und zugeordnete Codefolgen, welche benutzerabhängig Folgen von Codebuchmerkmalsvektoren referenzieren, sind in einem Referenzspeicher RS gespeichert. Zur Wortermittlung wird ein Sprachsignal in Zeitrahmen aufgeteilt, aus denen jeweils ein Sprachmerkmalsvektor extrahiert wird. Die sich ergebende Sprachmerkmalsvektorensequenz wird mit Codebuchmerkmalsvektorensequenzen verglichen, welche durch die im Referenzspeicher gespeicherten Codefolgen referenziert sind. Anhand von Ähnlichkeitswerten, die sich aus den Vergleichen ergeben, wird ein digitalisiertes Wort ermittelt, welches durch das Sprachsignal beschrieben ist.

## Beschreibung

Die Erfindung betrifft ein Verfahren, eine Vorrichtung und ein Computerprogramm zur Ermittlung eines Wortes aus einem Sprachsignal. Insbesondere betrifft die Erfindung ein Verfahren, eine Vorrichtung und ein Computerprogramm, bei dem die zu ermittelnden Worte trainiert werden können.

Aus dem Stand der Technik sind mit EP 0797185 ein Verfahren und eine Vorrichtung zur Spracherkennung bekannt, bei der die Spracherkennung mit einem sprecherunabhängigen Verfahren auch für von einem Benutzer neu hinzugefügte Sprachsignale ermöglicht wird. Dazu wird für jedes neu aufzunehmende Sprachsignal eine Abbildung auf gespeicherte Phonem-Merkmalsvektoren durchgeführt. Es werden mehrere Möglichkeiten miteinander verglichen, um eine geeignete Phonemrepräsentation des Sprachsignals zu ermitteln. Anschließend wird das Sprachsignal mit der Phonem-Darstellung in einem Benutzerspeicher gespeichert.

Wesentlich für Verfahren und Vorrichtungen zur sprecherabhängigen Spracherkennung ist der erforderliche Speicherplatz, der zur statischen Speicherung von Sprechproben benötigt wird. Ein entsprechendes Codebuch wächst proportional zur Anzahl der Sprechproben pro zu erkennendem Wort, zur Anzahl der zu erkennenden Wörter und zur Anzahl der Benutzer. Zur Abspeicherung wird ein statischer Direktzugriffsspeicher, oder in anderen Worten, ein statischer RAM-Speicher benötigt, welcher gegenüber einem Festwertspeicher (ROM) Nachteile in bezug auf seine Kosten und seinen Stromverbrauch hat.

Das oben als Stand der Technik genannte Verfahren reduziert den erforderlichen Speicherplatz durch eine Abbildung neu eingesprochener Worte auf schon abgespeicherte Phoneme. Allerdings erfordert das beschriebene Verfahren für gute Erkennungsergebnisse neben dem Basiswortschatz, welcher in Form der schon abgespeicherten Phoneme und Worte vorliegt, einen weiteren Benutzerwortschatz, welcher ebenfalls Phonemdarstellungen und Worte enthält, die allerdings sprecherabhängig erstellt werden müssen.

Weiterhin erfordert die Darstellung eines Phonems eine Abbildung durch mehrere Sprachmerkmalsvektoren. Für eine fehlerrobuste Spracherkennung ist es erforderlich, zahlreiche verschiedene Repräsentationen desselben Phonems im Speicher vorzusehen, wodurch die Menge des erforderlichen Speicherplatzes erhöht wird.

Demgemäß liegt der Erfindung die Aufgabe zugrunde, ein Verfahren und eine Vorrichtung zur Wortermittlung aus einem Sprachsignal vorzustellen, bei dem die Speicherung der zur Wortermittlung benötigten Vergleichsdaten speicherplatzeffizient und kostengünstig erfolgt.

Dies wird erfindungsgemäß gelöst durch die Lehre des Patentanspruchs 1, 10 und 16.

Vorteilhaft erweist es sich hierbei, daß in einem Codebuchspeicher Sprachmerkmalsvektoren gespeichert sind, auf die mit Hilfe von zugeordneten Codes zugegriffen werden kann. Diese Sprachmerkmalsvektoren, die im Codebuchspeicher gespeichert sind, werden im folgenden Codebuchmerkmalsvektoren genannt. Der Codebuchspeicher kann fabrikmäßig erstellt werden, und er kann daher eine optimale Repräsentanzmenge von zur Spracherkennung benötigten Grundelementen, oder in anderen Worten Sprachmerkmalsvektoren, enthalten. Die Codebuchspeichergröße ist unabhängig sowohl von der Anzahl der Benutzer als auch vom Training des sprecherabhängigen Systems.

Weiterhin vorteilhaft ist es, daß die im Codebuchspeicher gespeicherten Codebuchmerkmalsvektoren Grundelemente sind, die zur rechnergestützten Spracherkennung benötigt werden. Im Gegensatz zu phonem- oder wortbasierten Codebuchspeichern, bei denen die Phoneme oder Worte durch jeweils mindestens eine Folge von Merkmalsvektoren beschrieben sind, ergibt sich dadurch eine speichereffiziente Codebuchzusammensetzung. Weiterhin ist das aus sprachlichen Grundelementen zusammengesetztes Codebuch universell einsetzbar, da es nicht nur die Abbildung von einzelnen Phonemen oder Worten der menschlichen Sprache, sondern vielmehr die Abbildung der menschlichen Sprache selbst ermöglicht.

Weiterhin vorteilhaft ist es, daß in einem Referenzspeicher digitalisierte Worte und zugeordnete Codefolgen abgespeichert sind. Jeder Code einer Codefolge referenziert einen Codebuchmerkmalsvektor. So ergibt sich eine signifikante Speicherplatzersparnis für den Referenzspeicher. Eine typische Dimension eines Codebuchmerkmalsvektors bzw. Sprachmerkmalsvektors ist 16, bei der jede Komponente mindestens 1 Byte Speicherplatz benötigt. Somit benötigt ein Merkmalsvektor mindestens 16 Byte Speicherplatz. Demgegenüber benötigt ein Code typischerweise nur 2 Byte Speicherplatz, woraus sich für die vorliegende Erfindung eine Reduktion des benötigten Referenzspeicherplatzes um den Faktor 8 durch das Abspeichern von Codes gegenüber Sprachmerkmalsvektoren ergibt.

Weitere vorteilhafte Ausgestaltungen sind den Patentansprüchen 2 bis 9, 11 bis 15, sowie 17 zu entnehmen.

Vorteilhaft gemäß Patentanspruch 2 erweist sich, daß die Ähnlichkeitswerte, die im Rahmen der Spracherkennung durch Vergleiche von Sprachmerkmalsvektoren eines eingesprochenen Sprachsignals mit Codebuchmerkmalsvektoren ermittelt werden, im Referenzspeicher zwischengespeichert werden. Durch die Zuordnung der Ähnlichkeitswerte zu den entsprechenden Codefolgen, welche schon im Referenzspeicher vorliegen, kann eine doppelte Speicherung dieser Codefolgen vermieden werden, und insgesamt auf einen separaten Zwischenspeicher für Ähnlichkeitswerte verzichtet werden.

Vorteilhaft gemäß Patentanspruch 3 erweist sich, daß als Ergebnis der Wortermittlung nicht nur ein abgespeichertes digitalisiertes Wort, welches dem Sprachsignal entspricht, ermittelt wird, sondern auch ein diesem Wort zugeordnetes weiteres Wort. Dies ermöglicht einen flexiblen Einsatz der Worterkennung insbesondere in einem sprachgesteuerten System, bei dem das aus dem Sprachsignal ermittelte Wort ein Steuerkommando im Klartext ist, welches beispielsweise auf einem Bildschirm oder einer Kontrollvorrichtung ausgegeben werden kann, und bei dem das weitere Wort eine Zeichenkette von Steuercodes zur Steuerung des Systems ist.

Vorteilhaft gemäß Patentanspruch 4 erweist sich, daß das zweite digitalisierte Wort eine digitalisierte Telefonnummer ist. Dies ermöglicht die Verwendung in einem Kommunikationsendgerät, beispielsweise einem Mobiltelefon, für einen sprachgesteuerten Rufaufbau, bei dem ein Name eingesprochen wird, und das Mobiltelefon mit Hilfe der dem ermittelten Namen zugeordneten Telefonnummer eine Verbindung aufbaut.

Vorteilhaft gemäß Patentanspruch 5 erweist es sich, daß die Inhalte des Codebuchspeichers sprecherunabhängig sind, so daß eine effiziente fabrikmäßige Erzeugung der Codebuchspeicherinhalte unterstützt wird. Vorteilhaft ist es auch, daß die Referenzspeicherinhalte sprecherabhängig erzeugt sind, was eine hohe Erkennungsrate bei der Spracherkennung ermöglicht.

Vorteilhaft gemäß Patentanspruch 6 und gemäß Patentanspruch 11 erweist es sich, daß die Inhalte des Codebuchspeichers sprachenunabhängig sind. Dies bedeutet, daß mit Hilfe derselben Codebuchspeicherinhalte Worte unterschiedlicher Sprachen wie beispielsweise Deutsch oder Englisch, zu ermitteln sind. Es ist nicht notwendig, für unterschiedliche Sprachen unterschiedliche Codebuchspeicherinhalte zu verwenden. Somit kann ein erfindungsgemäßes Codebuch eine sprecherunabhängige und sprachenunabhängige Repräsentanz der menschlichen Sprache darstellen.

Vorteilhaft gemäß Patentanspruch 7 erweist es sich, daß auf die Sprachmerkmalsvektoren, die in dem Codebuchspeicher gespeichert sind, mit Hilfe von zugeordneten Codes zugegriffen werden kann. Daher braucht zum Training eines neuen Wortes der Codebuchspeicherinhalt nicht geändert werden, sondern es wird stattdessen eine Sequenz geeigneter Referenzen, oder mit anderen Worten eine geeignete Folge von Codes, im Referenzspeicher aufgenommen. Weiterhin vorteilhaft ist es, daß zum Training eines neuen Wortes aufgrund der fabrikmäßigen Erstellung des Codebuchspeichers keine neuen Sprachmerkmalsvektoren generiert und abgespeichert werden müssen, sondern daß das Training allein mit den im Codebuchspeicher vorgegebenen Sprachmerkmalsvektoren durchgeführt werden kann. Dies ist speicherplatzeffizient und kann die Komplexität und die Dauer des Trainingsvorgangs reduzieren.

Vorteilhaft gemäß Patentanspruch 8 und gemäß Patentanspruch 15 erweist es sich, daß einem neuen, trainierten Wort eine Telefonnummer zugeordnet werden kann. Dies kann insbesondere bei der Verwendung der erfindungsgemäßen Wortermittlung in einem Kommunikationsendgerät den sprachgesteuerten Verbindungsaufbau zu einem gegenüber dem Gerät durch seinen Namen identifizierten Teilnehmer ermöglichen.

Vorteilhaft gemäß Patentanspruch 9 erweist es sich, daß das Extrahieren eines Sprachmerkmalsvektors in einem Vektor resultiert, der sowohl Spektralkomponenten als auch eine Energiekomponente aufweist. Dies ermöglicht eine gute Erkennungsrate von eingesprochenen Worten, die einen hohen Rauschanteil im Sprachsignal aufweisen, sowie durch die Energienormierung auch von Worten, die mit unterschiedlicher Intensität eingesprochen werden.

Vorteilhaft gemäß Patentanspruch 12 erweist es sich, daß der Referenzspeicher ein Direktzugriffsspeicher (RAM) ist, und der Codebuchspeicher ein Festwertspeicher (ROM) ist. Übliche Direktzugriffsspeicher haben gegenüber üblichen Festwertspeichern eine geringere Speicherdichte und somit bei gleichen Speichergrößen einen höheren Platzbedarf, haben eine höhere Stromaufnahme und sind teurer. Somit ist es vorteilhaft gemäß der vorliegenden Erfindung, das Codebuch, das auch beim Training neuer Worte nicht geändert werden muß, und das typischerweise einen deutlich größeren Speicherplatzbedarf als die Referenzen hat, in einem ROM abzuspeichern, während die Referenzen, die beim Training ergänzt werden können, in einem - vorzugsweise statischen - RAM abgespeichert werden.

Vorteilhaft gemäß Patentanspruch 13 erweist es sich, daß durch eine Zusammenfassung von mindestens 4 der beschriebenen Komponenten der Rechnereinheit in einem Chip sowohl eine Platzeinsparung als eine Kostenreduktion erreicht wird.

Vorteilhaft gemäß Patentanspruch 14 erweist sich, daß die erfindungsgemäße Rechnereinheit zur Wortermittlung eine Rechnereinheit eines Mobiltelefons ist. Dadurch kann das Mobiltelefon durch Spracheingaben anstelle von Tastaturkommandos bedient werden, was insbesondere in Zusammenhang mit üblichen Freisprecheinrichtungen, beispielsweise im Auto, bedienungsfreundlich ist und, beispielsweise im Straßenverkehr, einen wichtigen Sicherheitsaspekt darstellt.

Vorteilhaft gemäß Patentanspruch 17 erweist es sich, daß das Computerprogramm durch die Speicherung auf einem computerlesbaren Medium nicht an eine einzige Rechnereinheit oder einen einzigen Computer gebunden ist, sondern einfach von verschiedenen Rechnern eingelesen werden kann, zum Beispiel zum Zweck von Simulation, Test oder Herstellung.

Im folgenden wird die Erfindung anhand von Ausführungsbeispielen und anhand der Figuren näher erläutert.

Folgende Figuren zeigen:
- Fig. 1:: Blockdiagramm zur vereinfachten Darstellung einer Verarbeitung eines Sprachsignals in einem Mobiltelefon,
- Fig. 2:: Blockdiagramm einer Rechnereinheit zur Wortermittlung,
- Fig. 3:: Darstellung von Beispieldaten von Speicherinhalten und von einer Wortzuordnung,
- Fig. 4:: Ablaufdiagramm des Ablaufs einer Worterkennung,
- Fig. 5:: Ablaufdiagramm des Ablaufs eines Trainings eines neuen Wortes,
- Fig. 6:: Ablaufdiagramm einer Extraktion eines Sprachmerkmals aus einem Sprachsignal.

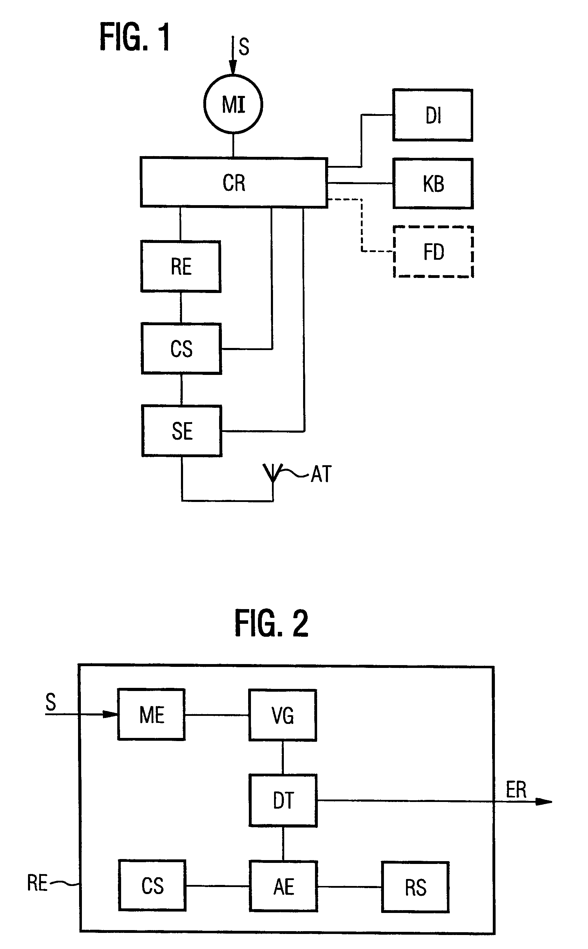

Im folgenden wird die Erfindung anhand von Fig. 1 näher erläutert. Fig. 1 zeigt beispielhaft die Verwendung der erfindungsgemäßen Rechnereinheit zur Wortermittlung in einem Mobiltelefon. Die angegebenen Funktionseinheiten des Mobiltelefons sind vereinfacht und nur insoweit dargestellt, wie es für das Verständnis der Erfindung notwendig ist.

Dargestellt in Fig. 1 sind ein Sprachsignal S, ein Mikrophon MI, eine Steuereinheit CR, eine erfindungsgemäße Rechnereinheit RE, ein Display DI als Ausgabevorrichtung, eine Tastatur KB als Eingabevorrichtung, eine weitere optionale Eingabevorrichtung FD, welche beispielsweise eine Maus oder ein Trackball sein kann, eine Vorrichtung zum Rufaufbau CS, eine Sendevorrichtung SE, sowie eine Antenne AT.

Die Steuereinheit ist gekoppelt mit dem Mikrophon MI, mit den Ein- und Ausgabeeinheiten DI, KB und FD, sowie mit der Rechnereinheit RE und der Vorrichtung zum Rufaufbau CS. Die Rechnereinheit CS ist weiterhin gekoppelt mit der Rechnereinheit RE und der Sendevorrichtung SE. Die Sendevorrichtung SE ist weiterhin gekoppelt mit der Antenne AT.

Die Steuereinheit CR steuert die Behandlung des über das Mikrophon MI aufgenommenen Sprachsignals S. Das Sprachsignal wird zur Rechnereinheit RE weitergeleitet, wenn ein Benutzer, beispielsweise mit Hilfe der Tastatur, einen Modus "Ermittlung" eingestellt hat. Der Modus wird der Rechnereinheit RE von der Steuereinheit CR signalisiert, und diese führt eine erfindungsgemäße Wortermittlung durch. Als Resultat wird eine Telefonnummer an die Vorrichtung CS weitergegeben, welche mit Hilfe dieser Telefonnummer über den Sender SE einen Anruf aufbaut. Die Vorrichtung CS signalisiert den erfolgten Rufaufbau zur Steuereinheit CR, welche in den Modus "Transparent" umschaltet und das Sprachsignal zur weiteren Abwicklung des Anrufes auf den Sender schaltet.

Das Resultat der Wortermittlung kann zur Kontrolle für den Benutzer auf dem Display DI ausgegeben werden. Angezeigt werden kann sowohl das direkte Ermittlungsergebnis, oder in anderen Worten, das Wort, welches durch das eingesprochene Sprachsignal S beschrieben ist. Alternativ kann auch ein dem ermittelten Wort zugeordnetes weiteres Wort angezeigt werden. Wenn ein Benutzer den trainierten Namen eines Teilnehmers in das Mikrophon MI spricht, wird aus dem Sprachsignal S zunächst der entsprechende digitalisierte Teilnehmername ermittelt und als Zwischenergebnis angezeigt. Im angegebenen Beispiel ist dem Teilnehmernamen als weiteres Wort eine Telefonnummer zugeordnet, welche als Endergebnis der Wortermittlung zum Rufaufbau benutzt wird, und welche ebenfalls über das Display DI ausgegeben werden kann.

Der Begriff "Wort" bezeichnet üblicherweise eine bedeutungstragende lautliche Einheit. Für die vorliegende Erfindung wird der Begriff aber weiter gefaßt und bezeichnet eine endliche Zeichenfolge mit mindestens einem Element. Daher soll eine Telefonnummer ausdrücklich als ein Wort im Sinne der vorliegenden Erfindung verstanden werden.

Wenn sich die in Fig. 1 dargestellte Steuereinheit CR im Modus "Transparent" befindet, wird das Sprachsignal S direkt, oder in anderen Worten, transparent für die Recheneinheit RE, von der Steuereinheit zum Sender SE weitergeleitet.

Die Steuereinheit CR gelangt in den Modus "Training" beispielsweise durch eine entsprechende Benutzereingabe oder durch eine fehlgeschlagene Wortermittlung. Dann wird ein aufgenommenes Sprachsignal S zur Durchführung einer Trainingssequenz, oder in anderen Worten, zur Aufnahme eines neuen Wortes, welches durch das Sprachsignal beschrieben ist, an die Rechnereinheit RE weitergeleitet. Dabei signalisiert die Steuereinheit CR der Rechnereinheit RE den Modus "Training". Das dem Sprachsignal S entsprechende Wort wird über eine Eingabevorrichtung KB, FD eingegeben. Zusätzlich kann auch ein weiteres Wort, beispielsweise eine Telefonnummer, eingegeben und entsprechend zugeordnet werden.

Fig. 2 zeigt die erfindungsgemäße Rechnereinheit RE. Sie enthält eine Extraktionseinheit ME zur Extraktion von Sprachmerkmalsvektoren aus dem Sprachsignal S, einen Codebuchspeicher CS mit fabrikmäßig sprecherunabhängig gespeicherten Codebuchmerkmalsvektoren und Codes, einen Referenzspeicher RS zur sprecherabhängigen Speicherung von digitalisierten Worten und Codefolgen, eine Ausleseeinheit AE zum Auslesen von Codebuchmerkmalsvektoren aus dem Codebuchspeicher, einen Vergleicher VG zum Vergleichen von aus dem Sprachsignal extrahierten Sprachmerkmalsvektoren mit Codebuchmerkmalsvektoren des Codebuchspeichers und eine Ermittlungseinheit DT zur Ermittlung eines digitalisierten Wortes aus dem Referenzspeicher RS als Erkennungsergebnis ER, durch welches das Sprachsignal S beschrieben ist.

Jedem im Codebuchspeicher CS gespeicherten Codebuchmerkmalsvektor ist jeweils ein Code zugeordnet. Jedem im Referenzspeicher RS gespeicherten digitalisierten Wort ist mindestens eine Folge von Codes zugeordnet. Das Auslesen von Codebuchmerkmalsvektoren aus dem Codebuchspeicher CS erfolgt durch die Ausleseeinheit AE mit Hilfe von Codes der im Referenzspeicher RS gespeicherten Codefolgen.

In einer vorteilhaften Ausgestaltung der erfindungsgemäßen Rechnereinheit RE sind von den Komponenten Extraktionseinheit ME, Codebuchspeicher CS, Referenzspeicher RS, Vergleicher VG, Ausleseeinheit AE und Ermittlungseinheit mindestens vier Komponenten auf einem Chip realisiert. Beispielsweise können in einer Ausführung mit Ausnahme der Speicher Speichern alle anderen genannten Komponenten in einem Chip implantiert werden.

In einer weiteren vorteilhaften Ausgestaltung der erfindungsgemäßen Rechnereinheit RE ist der Referenzspeicher RS ein Direktzugriffsspeicher (RAM). Vorzugsweise wird ein sogenannter nichtflüchtiger, das heißt statischer, RAM-Speicher verwendet, weil dadurch die sprecherabhängig gespeicherten digitalisierten Worte und Codes auch nach Abschalten der Versorgungsspannung erhalten bleiben. Im Gegensatz zum Referenzspeicherinhalt, welcher durch einen Benutzer erstellt, geändert oder erweitert werden kann, ist der Inhalt des Codebuchspeichers CS fabrikmäßig unveränderlich und sprecherunabhängig vorgegeben. Daher wird für den Codebuchspeicher CS in dieser Ausgestaltung vorzugsweise ein Festwertspeicher (ROM) verwendet.

Im folgenden wird die Erzeugung der Codebuchmerkmalsvektoren des Codebuchspeichers, oder in anderen Worten des Codebuches, erläutert (ohne Figur). Dieser Vorgang setzt sich zusammen aus der Bereitstellung eines initialen Codebuches mit Codebuchmerkmalsvektoren und der Optimierung des initialen Codebuches. Die dazu angegebenen Verfahren sind beispielhaft und keineswegs als einschränkend zu verstehen.

Als initiales Codebuch kann ein schon vorhandenes Codebuch benutzt werden, welches die gewünschte Anzahl Codebuchmerkmalsvektoren hat. Falls das initiale Codebuch eine kleinere als die gewünschte Anzahl Codebuchmerkmalsvektoren aufweist, kann es sukzessiv bis zur gewünschten Anzahl erweitert werden. Dies kann durch eine zufällige Auswahl von Merkmalsvektoren aus einer Trainingsvektorfolge erfolgen. Alternativ kann das initiale Codebuch, dessen Codebuchmerkmalsvektoren jeweils K Elemente aufweisen und so einen K-dimensionalen Raum aufspannen, aus vielen Codebüchern für unabhängige Unterräume des K-dimensionalen Raums erstellt werden. Eine andere Möglichkeit ist das "Splitten". Beim Splitten wird ein Codebuchmerkmalsvektor durch zwei Codebuchmerkmalsvektoren ersetzt. Dies kann beispielsweise durch Kopieren des Vektors mit anschließendem Addieren eines Offsets zu allen Komponenten des einen Vektors, sowie dem Subtrahieren des gleichen Offsets von allen Komponenten des anderen Vektors erfolgen. Beim "binären Splitten" werden jeweils alle im Codebuch befindlichen Codebuchmerkmalsvektoren nach diesem Prinzip geteilt, bis die gewünschte, als Zweierpotenz darstellbare Anzahl Codebuchmerkmalsvektoren erreicht ist. Beim "einfachen Splitten" wird dagegen nur jeweils ein Codebuchmerkmalsvektor aufgeteilt, so daß eine beliebige Codebuchgröße zu erzielen ist.

Eine Möglichkeit der Codebuchoptimierung ist die Verwendung des dem Fachmann bekannten, sogenannten Linde-Buzo-Gray (LBG) Algorithmus. Dieser Algorithmus zur Signalcodierung kann iterativ die Partitionsgrenzen eines Codebuches optimieren, so daß der auftretende Fehler für die verwendete Trainingssequenz minimiert wird. Alternativen sind die Verwendung des sogenannten K-means Algorithmus, sowie der Einsatz des LBG Algorithmus im Rahmen des Splittens schon bei der Erzeugung des initialen Codebuches.

Sowohl durch die Verwendung eines sprachenunabhängigen initialen Codebuches, durch mehrsprachige Trainingssequenzen, als auch durch den Optimierungsalgorithmus selbst ergeben sich sprachenunabhängige Codebuchmerkmalsvektoren, so daß die erfindungsgemäße Wortermittlung nicht auf Worte einer einzigen Sprache beschränkt ist.

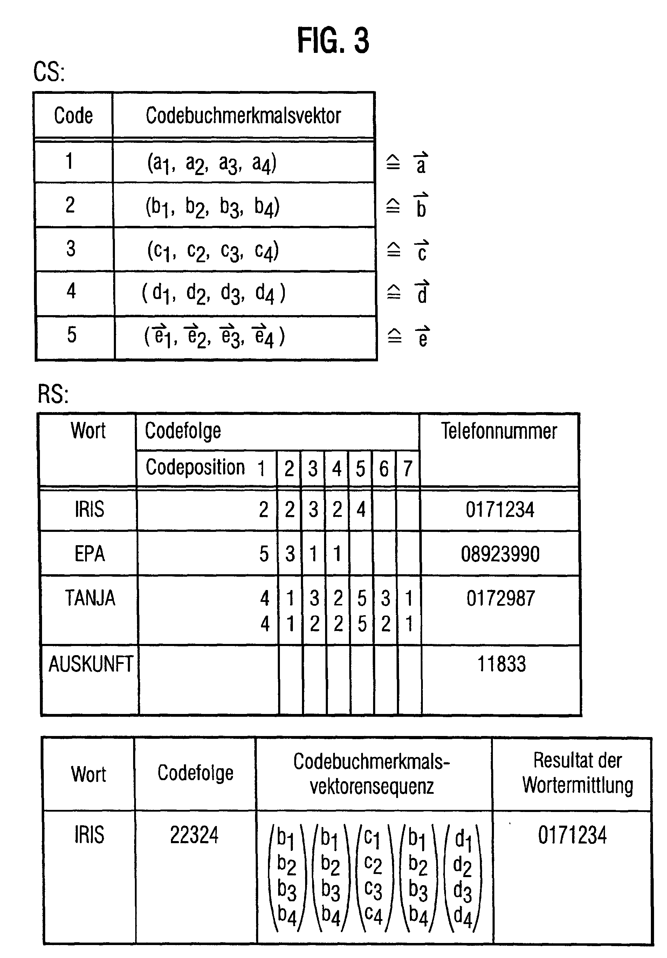

Fig. 3 zeigt anschaulich anhand von sowohl strukturell als auch inhaltlich vereinfachter Daten ein Beispiel für Speicherinhalte des Codebuchspeichers CS und des Referenzspeichers RS. Weiterhin wird ein Beispiel für eine Wortzuordnung gezeigt.

Der Codebuchspeicher CS enthält Codebuchmerkmalsvektoren und jeweils eindeutig zugeordnete Codes. Beispielsweise ist dem Codebuchmerkmalsvektor 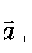 , bestehend aus den Komponenten a1, a2, a3 und a4, der Code 1 zugeordnet, dem Codebuchmerkmalsvektor 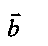 , bestehend aus den Komponenten b1, b2, b3 und b4 ist der Code 2 zugeordnet usw. Generell sind aber weder der Code noch die einzelnen Elemente der Codebuchmerkmalsvektoren auf einen speziellen Datentyp festgelegt. Beispielsweise kann der Code auch alphanumerisch dargestellt werden. Die Anzahl der Elemente eines Codebuchmerkmalsvektors ist abhängig vom verwendeten Verfahren zur Merkmalsextraktion und kann innerhalb eines Codebuchspeichers variieren.

Der Referenzspeicher RS enthält Worte ("IRIS", "EPA"...), denen jeweils üblicherweise mindestens eine Codefolge zugeordnet ist. Beispielsweise ist dem Wort "IRIS" die Codefolge "22324" zugeordnet. Einem Wort können auch mehrere Codefolgen zugeordnet werden, um die Fehlerrate der Wortermittlung insbesondere bei wechselnder Aussprache durch einen Benutzer zu verringern. Ein Wort ohne zugeordnete Codefolge ist nicht trainiert und kann, obwohl es im Referenzspeicher RS gespeichert sein kann, im Rahmen der Wortermittlung nicht erkannt werden. Eine Codefolge besteht aus Codes für Codebuchmerkmalsvektoren. Die Anzahl der jeweiligen Codes der Codefolgen kann variabel sein - mit anderen Worten, die Codefolgen des Referenzspeichers können unterschiedliche Längen haben. Die Positionen der Codes der Codefolge sind eindeutig festgelegt, und jeder einzelne Code einer Codefolge ist über seine Position aus dem Referenzspeicher auszulesen. Beispielsweise hat für die dem Wort "IRIS" zugeordnete Codefolge die Position 1 den Code "2", die Position 2 den Code "2", die Position 3 den Code "3" usw. Bei der in Fig. 3 gezeigten Ausgestaltung der vorliegenden Erfindung sind im Referenzspeicher den Worten zusätzlich als weitere Worte jeweils Telefonnummern eindeutig zugeordnet. So kann mit Hilfe der vorliegenden Erfindung im Rahmen der Worterkennung aus einem eingesprochenen Sprachsignal zunächst ein Name als erstes Wort ermittelt werden, und weiterhin ein zweites Wort, beispielsweise, wie angegeben, eine Telefonnummer.

Die Zusammenhänge zwischen Codebuchspeicherinhalten und Referenzspeicherinhalten sind in Fig. 3 am Beispiel des Wortes "IRIS" gezeigt. Dem Wort "IRIS" ist im Referenzspeicher RS die Codefolge "22324" zugeordnet. Ersetzt man die Codes der Codefolge durch die entsprechenden Codebuchmerkmalsvektoren des Codebuchspeichers, ergibt sich als Codebuchmerkmalsvektorensequenz die dargestellte Codebuchmerkmalsvektorensequenz. Damit ist dieser angegebenen Sequenz, und damit dem Wort "IRIS", die Telefonnummer "0171234" aus dem Referenzspeicher zugeordnet.

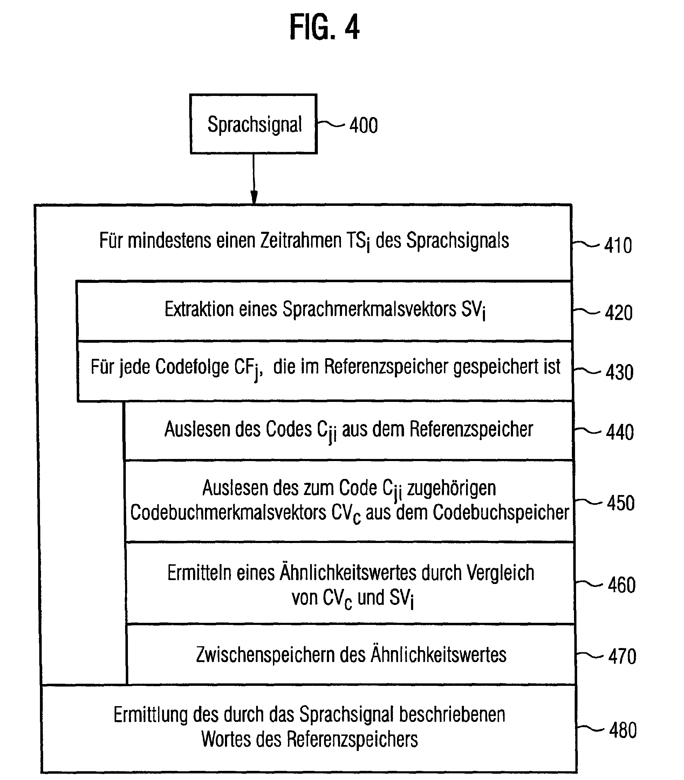

Fig. 4 illustriert das erfindungsgemäße Verfahren zur rechnergestützten Ermittlung eines Wortes aus einem Sprachsignal. Generell geht die vorliegende Erfindung von einem Sprachsignal aus, welches im wesentlichen nur relevante Information enthält, und welches ein digitalisiertes Wort des Referenzspeichers beschreibt. Die erste Voraussetzung kann durch Filterung von Störgeräuschen und von Rauschen erfüllt werden. Dies kann entweder vor der Durchführung des erfindungsgemäßen Verfahrens oder im Rahmen der Extraktion von Sprachmerkmalen erfolgen. Entsprechende Verfahren sind dem Fachmann bekannt. Gleiches gilt für Verfahren zu Bestimmung des Wortanfangs und des Wortendes, die zusammen mit dem erfindungsgemäßen Verfahren eingesetzt werden können, wenn die Wortermittlung auf kontinuierliche Sprache, oder anders gesagt auf eine Folge von Worten, angewendet wird.

Zur in Fig, 4 dargestellten Wortermittlung wird das Sprachsignal 400 in eine endliche Folge von Zeitrahmen TS eingeteilt. Dies kann entweder während der Aufnahme des Sprachsignals, mit anderen Worten in sogenannter Echtzeitverarbeitung, oder mit Hilfe einer Zwischenspeicherung erfolgen. Die zeitliche Abfolge der Zeitrahmen TS ist dabei durch eine Zuordnung eines Index i eindeutig beschrieben. Beispielsweise hat der erste Zeitrahmen TS₁ den Indexwert 1, der zweite Zeitrahmen TS₂ den Indexwert 2 usw.

Zur Wortermittlung wird aus den Zeitrahmen TSᵢ oder mit anderen Worten, aus mindestens einem Zeitrahmen TSᵢ 410, jeweils ein Sprachmerkmalsvektor SVᵢ extrahiert und zwischengespeichert 420. Entsprechende Zeitrahmen können vorgegeben werden. Dies bedeutet, daß sowohl die Anzahl der zur Wortermittlung verwendeten Zeitrahmen (beispielsweise 10 Zeitrahmen, vorzugsweise alle Zeitrahmen oder mindestens ein Zeitrahmen), als auch die Art der Auswahl (beispielsweise jeder zweite, jeder dritte Zeitrahmen) vorgegeben sind.

Zum Vergleich eines so erhaltenen Sprachmerkmalsvektors SVᵢ mit Codebuchmerkmalsvektoren CV wird für alle im Referenzspeicher RS gespeicherten Codefolgen CFⱼ 430 jeweils derjenige Code Cⱼᵢ ausgelesen 440, dessen Position in der Codefolge CFⱼ dem Indexwert i des Zeitrahmens TSᵢ zugeordnet ist. Der Index j dient zur Unterscheidung der Codefolgen CF des Referenzspeichers und läuft im angegebenen Beispiel vom Wert 1 bis zur Anzahl der vorhandenen Codefolgen CF. Für jeden so ermittelten Code Cⱼᵢ wird der entsprechende, das heißt zugeordnete, Codebuchmerkmalsvektor CV_{c} aus dem Codebuchspeicher CS ausgelesen 450 und mit dem zwischengespeicherten Sprachmerkmalsvektor SVᵢ verglichen 460.

Das Resultat eines jeweiligen Vergleiches ist ein Ähnlichkeitswert 460, der die Ähnlichkeit des Sprachmerkmalsvektors SVᵢ und des Codebuchmerkmalsvektors CV_{c} angibt. Der Ähnlichkeitswert kann beispielsweise ein Wahrscheinlichkeitswert der Übereinstimmung sein oder der Betrag der Differenz der Vektoren SVᵢ und CV_{c}. Der jeweilige Ähnlichkeitswert wird so zwischengespeichert 470, daß er eindeutig dem im Referenzspeicher RS durch die Codefolge CFⱼ beschriebenen Wort zugeordnet ist. Diese Zwischenspeicherung erfolgt vorzugsweise im Referenzspeicher RS.

Für jeden extrahierten Sprachmerkmalsvektor SVᵢ ergibt sich so jeweils eine der Anzahl der Codefolgen CFⱼ des Referenzspeichers RS entsprechende Anzahl von Ähnlichkeitswerten.

Aus den beim Vergleich ermittelten Ähnlichkeitswerten wird dasjenige im Referenzspeicher RS gespeicherte Wort ermittelt 480, durch welches das Sprachsignal beschrieben ist. Dies kann anhand der Ähnlichkeitswerte durch verschiedene, dem Fachmann geläufige, Verfahren erfolgen, beispielsweise durch den Algorithmus der sogenannten dynamischen Programmierung oder durch den sogenannten Viterbi-Algorithmus.

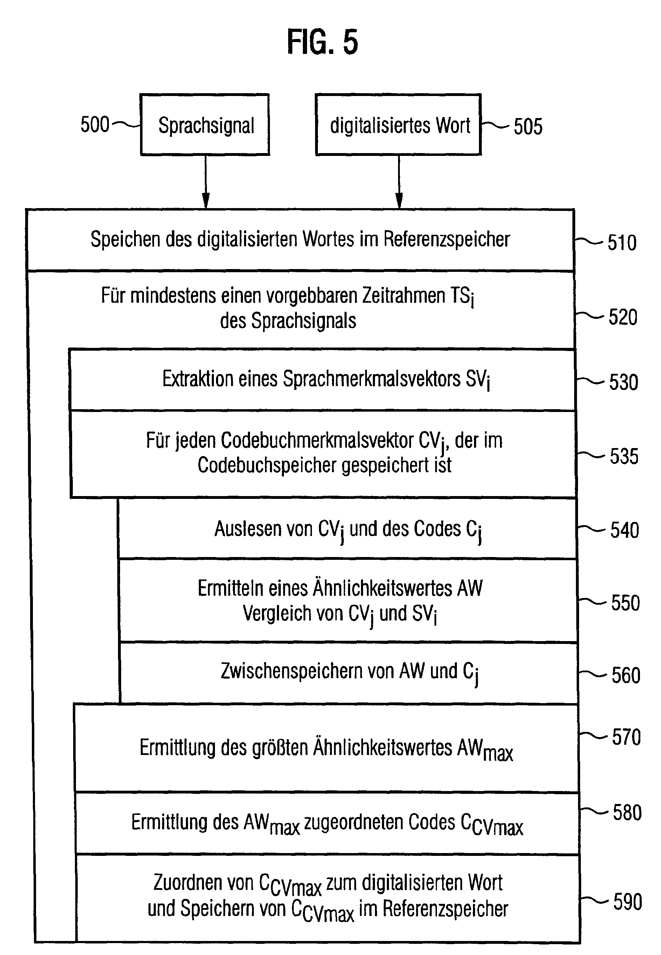

Fig. 5 stellt die erfindungsgemäße Neuaufnahme eines Wortes, oder mit anderen Worten die Trainingsphase der Worterkennung, dar. Dabei wird der Referenzspeicherinhalt sprecherabhängig um ein digitalisiertes Trainingswort 505 und um die Darstellung eines zugeordneten Sprachsignals 500, welches im folgenden auch als Trainingssprachsignal bezeichnet wird, erweitert.

Zunächst wird das digitalisierte Trainingswort 505 im Referenzspeicher RS gespeichert 510. Ebenso wie bei der in Fig. 4 beschriebenen Wortermittlung wird anschließend das Trainingssprachsignal in eine endliche Folge von vorgegebenen Zeitrahmen TS eingeteilt. Den Zeitrahmen TS wird mittels eines Index i ein Indexwert zugeordnet, der die zeitliche Abfolge der Zeitrahmen TSᵢ eindeutig beschreibt. Aus den Zeitrahmen TSᵢ, oder mit anderen Worten aus mindestens einem Zeitrahmen TSᵢ 520, wird jeweils ein Sprachmerkmalsvektor SVᵢ extrahiert 530.

Danach wird eine Codefolge ermittelt, welche eine Folge referenzierter Codebuchmerkmalsvektoren angibt, durch welche die Sprachmerkmalsvektorenfolge des neu aufgenommenen Wortes beschrieben ist. Diese Codefolge wird dem neu aufgenommenen Wort zugeordnet und im Referenzspeicher abgespeichert 590.

Dazu wird im einzelnen jeder extrahierte Sprachmerkmalsvektor SVᵢ mit allen im Codebuchspeicher CS gespeicherten Codebuchmerkmalsvektoren CVⱼ 535 verglichen. Dazu werden der jeweilige Codebuchmerkmalsvektor CVⱼ und der zugeordnete Code Cⱼ aus dem Codebuchspeicher CS ausgelesen 540. Jeder Vergleich resultiert wie bei der Wortermittlung in einem Ähnlichkeitswert AW 550, also beispielsweise einem Wahrscheinlichkeitswert oder einem Vektordifferenzbetrag, der zusammen mit dem Code Cⱼ des entsprechenden Codebuchmerkmalsvektors CVⱼ zwischengespeichert wird 560. Die Anzahl der sich pro extrahiertem Sprachmerkmalsvektor SVᵢ ergebenden Ähnlichkeitswerte AW ist gleich der Anzahl der im Codebuchspeicher CS gespeicherten Codebuchmerkmalsvektoren CVⱼ.

Anschließend wird aus den zwischengespeicherten Codes Cⱼ und Ähnlichkeitswerten zu jedem Sprachmerkmalsvektor SVᵢ der Code C_{cvmax} mit der größten Ähnlichkeit ermittelt 580. Dazu wird beispielsweise der größte Wahrscheinlichkeitswert AWₘₐₓ der Übereinstimmung oder - im Fall von Vektordifferenzbeträgen als Ähnlichkeitswerte - der geringste Vektordifferenzbetrag gesucht 570. Der so ermittelte Code C_{cvmax} wird im Referenzspeicher RS so abgespeichert, daß er ein Element einer Codefolge bildet, welche dem digitalisierten Trainingswort zugeordnet ist, und daß dessen Position in der Codefolge durch den Indexwert des Zeitrahmens TSᵢ, aus dem der jeweilige Sprachmerkmalsvektor extrahiert worden ist, eindeutig beschrieben ist 590. Beispielsweise kann der Code, der aus dem Vergleich der Codebuchmerkmalsvektoren mit dem ersten Sprachmerkmalsvektor resultiert, an der ersten Position der Codefolge abgespeichert werden, der Code, der aus dem Vergleich der Codebuchmerkmalsvektoren mit dem zweiten Sprachmerkmalsvektor resultiert, an der zweiten Position der Codefolge abgespeichert werden, usw. In einer weiteren erfindungsgemäßen Ausgestaltung können im Referenzspeicher mehrere Codefolgen einem einzigen digitalisierten Wort zugeordnet werden. Dies geschieht entsprechend dem schon beschriebenen Verfahren zur Neuaufnahme eines Wortes, wobei auf die erneute Speicherung des Wortes verzichtet wird.

In einer weiteren erfindungsgemäßen Ausgestaltung wird zusätzlich ein weiteres Wort, beispielsweise eine Steuerzeichensequenz oder eine Telefonnummer, im Referenzspeicher dem neu aufgenommenen Wort zugeordnet und abgespeichert.

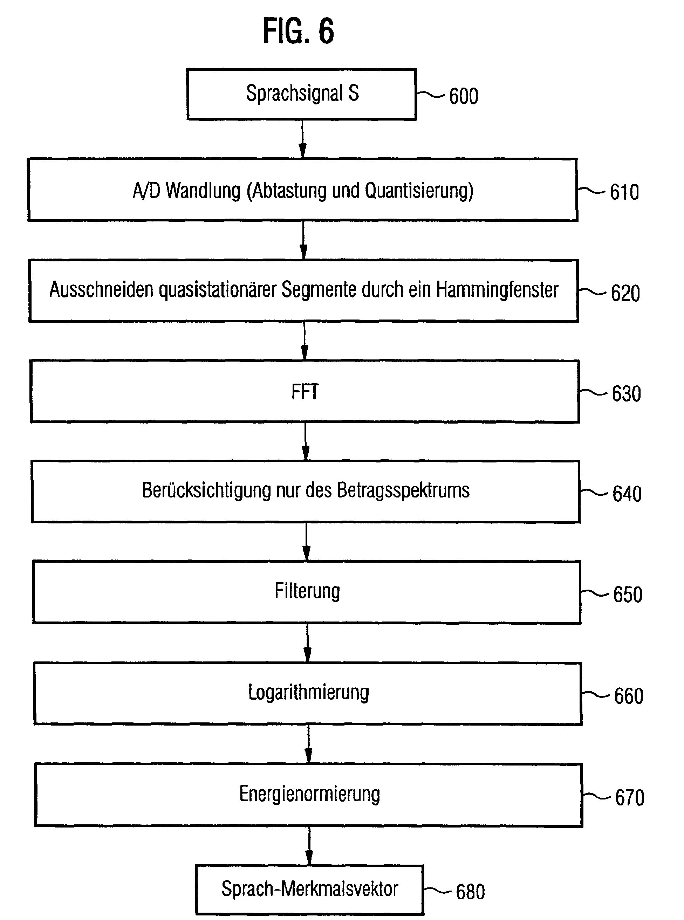

Fig. 6 zeigt beispielhaft den Ablauf der Sprachmerkmalsextraktion. Zunächst wird ein zeitkontinuierliches Sprachsignal 600, welches in Zeitfenster - beispielsweise mit der Breite von 10 ms - eingeteilt ist, abgetastet, beispielsweise mit einer Abtastfrequenz von 8 kHz, und mittels eines Analog-Digital-Wandlers - beispielsweise mit 16 bit Auflösung - quantisiert 610. Bei einer Zeitfensterbreite von 10 ms und einer Abtastfrequenz von 8 kHz enthält jedes Zeitfenster 80 Abtastwerte. Da ein Sprachsignal nur über eine kurze Zeitperiode (ca. 10 ms bis 50 ms) als konstant angesehen werden kann, sollte die Fensterbreite diese Zeitperiode nicht überschreiten. Für jedes Zeitfenster wird eine Sprachmerkmalsberechnung ausgelöst. Nach einer Filterung und Verstärkung der Abtastwerte (nicht gezeigt in Fig. 6), wird ein sogenanntes Hammingfenster - beispielsweise der Breite 32 ms - eingesetzt, um ein quasistationäres Segment des - jetzt diskret vorliegenden - Sprachsignals auszuschneiden 620. Bei der beispielhaft angegebenen Breite von 32 ms des Hammingfensters werden auch Abtastwerte des Sprachsignals erfaßt, die nicht zum eigentlichen Zeitfenster von 10 ms gehören. Dadurch wird eine bessere Merkmalsextraktion ermöglicht.

Die Abtastwerte des ausgeschnittenen Segmentes werden einer sogenannten Fast Fourier Transformation FFT unterzogen 630. Da das Sprachsignal immer reelwertig ist, resultiert ein spiegelbildliches Spektrum. Daher genügt die erste Hälfte der resultierenden Spektralwerte, um das Spektrum vollständig zu beschreiben. Da weiterhin der Phasenverlauf zur Wortermittlung bedeutungslos ist, wird lediglich mit dem quadratischen Betragsfrequenzgang weitergerechnet 640. Ein 32 ms Segment liefert 256 Abtastwerte, die FFT resultiert in 256 Spektralwerten. Nach Bildung des quadratischen Betragsfrequenzgangs wird nun mit 128 Spektralwerten weitergerechnet.

Aus den Spektralwerten wird mit Hilfe geeigneter Filterung ein mehrdimensionaler Merkmalsvektor gewonnen, der die Hüllkurve des Segmentes repräsentiert 650. Dazu lassen sich die 128 Spektralwerte beispielsweise (nicht gezeigt in Fig. 6) mittels 15 überlappender, sogenannter Dreieckskerne, die nach der sogenannten MEL-Skala angeordnet sind, gruppieren. Die Gruppierung wird durch Multiplikation der einzelnen Dreieckskerne mit dem Betragsspektrum erzielt, wobei die Ergebnisse innerhalb eines solchen Kerns aufsummiert werden. Im genannten Beispiel resultiert dies in einem 15-dimensionalen Merkmalsvektor, der die Hüllkurve des 32 ms Segmentes repräsentiert. Dieser Merkmalsvektor wird, in Anlehnung an die logarithmische Charakteristik des menschlichen Ohres, logarithmiert 660. Anschließend wird die Energie des Vektors bestimmt, und der Vektor wird durch die Division jeder einzelnen Komponente durch die berechnete Energie normiert 670. Dabei wird die berechnete Energie als weitere Komponente dem Vektor hinzugefügt, so daß im angegebenen Beispiel als Ergebnis der Sprachmerkmalsextraktion ein Sprachmerkmalsvektor mit 16 Komponenten vorliegt 670.

Optional kann noch die Differenz zum vorhergehenden Vektor berechnet werden, um beispielsweise Hintergrundrauschen, welches als ein konstanter Anteil im Sprachmerkmalsvektor enthalten sein kann, zu beseitigen. Der Differenzsprachmerkmalsvektor bildet dann letztendlich das eigentliche Resultat der Merkmalsextraktion.

Eine weitere Ausgestaltung der vorliegenden Erfindung, die ohne Figur erläutert wird, betrifft ein Computerprogramm. Der Begriff "Computerprogramm" im Sinne der vorliegenden Erfindung schließt den Begriff "Computerprogrammprodukt" ausdrücklich ein. Das Computerprogramm, welches in den internen Speicher einer digitalen Rechnereinheit, insbesondere eines Mobiltelefons, geladen werden kann, enthält Softwarecodeteile, die geeignet sind, das beschriebene erfindungsgemäße Verfahren durchzuführen, wenn das Computerprogramm auf der Rechnereinheit ausgeführt wird.

Dieses Computerprogramm kann insbesondere auch auf einem computerlesbaren Medium wie beispielsweise einer Diskette, CD-ROM oder einer optischen Platte gespeichert sein.

## Patentansprüche

1. Verfahren zur rechnergestützten Ermittlung eines Wortes aus einem Sprachsignal,
a) bei dem das Sprachsignal in eine Folge von Zeitrahmen, denen jeweils ein Indexwert zugeordnet wird, eingeteilt wird,
b) bei dem eine zeitliche Abfolge der Zeitrahmen durch die zugeordneten Indexwerte eindeutig beschrieben ist,
c) bei dem für mindestens einen Zeitrahmen des Sprachsignals folgende Schritte durchgeführt werden:
c1) Extrahieren und Zwischenspeichern eines Sprachmerkmalsvektors des Zeitrahmens,
c2) bei dem für mindestens eine Codefolge, die in einem Referenzspeicher gespeichert ist und der jeweils ein im Referenzspeicher gespeichertes erstes digitalisiertes Wort zugeordnet ist, folgende Schritte durchgeführt werden:
c2i) Auslesen eines Codes der Codefolge, dessen Position in der Codefolge dem Indexwert des Zeitrahmens zugeordnet ist,
c2ii) Auslesen eines dem ausgelesenen Code zugeordneten Codebuchmerkmalsvektors aus einem Codebuchspeicher,
c2iii) Ermitteln und Zwischenspeichern eines Ähnlichkeitswertes aus einem Vergleich des zwischengespeicherten Sprachmerkmalsvektors mit dem ausgelesenen Codebuchmerkmalsvektor,
d) bei dem anhand der zwischengespeicherten Ähnlichkeitswerte dasjenige im Referenzspeicher gespeicherte erste digitalisierte Wort ermittelt wird, durch welches das Sprachsignal beschrieben ist.

2. Verfahren nach Anspruch 1, bei dem zusätzlich
- das Zwischenspeichern des jeweils ermittelten Ähnlichkeitswertes im Referenzspeicher erfolgt.

3. Verfahren nach einem der Ansprüche 1 oder 2, bei dem zusätzlich ein zweites digitalisiertes Wort ermittelt wird, welches dem ersten digitalisierten Wort, durch welches das Sprachsignal beschrieben ist, zugeordnet und im Referenzspeicher abgespeichert ist.

4. Verfahren nach Anspruch 3, bei dem das zweite digitalisierte Wort eine digitalisierte Telefonnummer ist.

5. Verfahren nach einem der Ansprüche 1 bis 4, bei dem
- Inhalte des Referenzspeichers sprecherabhängig sind
- Inhalte des Codebuchspeichers sprecherunabhängig sind.

6. Verfahren nach einem der Ansprüche 1 bis 5, bei dem Inhalte des Codebuchspeichers sprachenunabhängig sind.

7. Verfahren nach einem der Ansprüche 1 bis 6, bei dem Inhalte des Referenzspeichers durch folgende Schritte sprecherabhängig mit Hilfe eines digitalisierten Trainingswortes und zugeordnetem Trainigssprachsignal erweitert werden:
a) Einteilen des Trainingssprachsignals in eine Folge von Zeitrahmen mit jeweils einem Indexwert, der eine zeitliche Abfolge der Zeitrahmen eindeutig beschreibt,
b) Speichern des digitalisierten Trainingswortes im Referenzspeicher,
c) Durchführen folgender Schritte für mindestens einen Zeitrahmen des Trainingssprachsignals:
c1) Extrahieren und Zwischenspeichern eines Sprachmerkmalsvektors aus einem durch den Zeitrahmen bezeichneten Teil des Trainingssprachsignals,
c2) Durchführen folgender Schritte für mindestens einen Codebuchmerkmalsvektor, der im Codebuchspeicher gespeichert ist:
c2i) Auslesen des Codebuchmerkmalsvektors und Zwischenspeichern des dem ausgelesenen Codebuchmerkmalsvektor zugeordneten Codes,
c2ii) Ermitteln eines Ähnlichkeitswertes aus einem Vergleich des zwischengespeicherten Sprachmerkmalsvektors mit dem ausgelesenen Codebuchmerkmalsvektor,
c3ii) Zwischenspeichern des Ähnlichkeitswertes, so daß der Ähnlichkeitswert dem zwischengespeicherten Code zugeordnet ist,
c3) Ermitteln desjenigen Codes anhand der zwischengespeicherten Ähnlichkeitswerte, welcher demjenigen Codebuchmerkmalsvektor zugeordnet ist, durch welchen der Sprachmerkmalsvektor beschrieben ist,
c4) Speichern des ermittelten Codes im Referenzspeicher, so daß der ermittelte Code ein Element einer Codefolge bildet, welche dem digitalisierten Trainingswort zugeordnet ist, und so daß dessen Position in der Codefolge durch den Indexwert des Zeitrahmens eindeutig beschrieben ist.

8. Verfahren nach Anspruch 7, bei dem zusätzlich dem digitalisierten Trainingswort ein weiteres digitalisiertes Wort zugeordnet und im Referenzspeicher abgespeichert wird.

9. Verfahren nach einem der Ansprüche 1 bis 8, bei dem das Extrahieren eines Sprachmerkmalsvektors durch folgende Schritte erfolgt:
- Abtasten eines Sprachsignalteils, welches mindestens den durch den Zeitrahmen gekennzeichneten Teil des Sprachsignals enthält, mit einer vorgebbaren Abtastfrequenz,
- Quantisieren der Abtastwerte in diskrete Abtastwerte,
- Zwischenspeichern der diskreten Abtastwerte,
- Ermitteln mit Hilfe einer Schnellen Fourier Transformation (FFT) von Spektralwerten, bei der die Spektralwerte aus den diskreten Abtastwerten des Zeitrahmens und aus einer vorgebbaren Anzahl von Abtastwerten außerhalb des Zeitrahmens berechnet werden,
- Bestimmung eines ersten Vektors durch eine Filterung von Spektralwerten, die das Betragsspektrum der Spektralwerte repräsentieren,
- Bestimmung eines zweiten Vektors durch eine Logarithmierung des ersten Vektors,
- Bestimmung des Sprachmerkmalsvektors durch eine Energienormierung des zweiten Vektors, bei der die berechnete Energie des zweiten Vektors als zusätzliche Vektorkomponente dem Sprachmerkmalsvektor hinzugefügt wird.

10. Rechnereinheit zur Ermittlung eines Wortes aus einem Sprachsignal,
- mit einer Extraktionseinheit zur Extraktion von Sprachmerkmalsvektoren aus dem Sprachsignal,
- mit einem Codebuchspeicher mit sprecherunabhängig gespeicherten Codebuchmerkmalsvektoren und Codes, bei dem den Codebuchmerkmalsvektoren jeweils ein Code zugeordnet ist,
- mit einem Referenzspeicher zur sprecherabhängigen Speicherung von digitalisierten Worten und Codefolgen, bei dem jeweils einem digitalisierten Wort mindestens eine Codefolge zugeordnet ist,
- mit einer Ausleseeinheit zum Auslesen von Codebuchmerkmalsvektoren aus dem Codebuchspeicher, bei der das Auslesen mit Hilfe von jeweils einem Code der Codefolgen des Referenzspeichers erfolgt,
- mit einem Vergleicher zum Vergleichen von aus dem Sprachsignal extrahierten Sprachmerkmalsvektoren mit Codebuchmerkmalsvektoren des Codebuchspeichers, und
- mit einer Ermittlungseinheit zur Ermittlung eines digitalisierten Wortes aus dem Referenzspeicher, durch welches das Sprachsignal beschrieben ist.

11. Rechnereinheit nach Anspruch 10, bei der die Codebuchmerkmalsvektoren des Codebuchspeichers sprachenunabhängig sind.

12. Rechnereinheit nach Anspruch 10 oder 11, bei welcher der Referenzspeicher ein Direktzugriffsspeicher (RAM) ist, und bei welcher der Codebuchspeicher ein Festwertspeicher (ROM) ist.

13. Rechnereinheit nach Anspruch 10, 11 oder 12, bei der mindestens vier der folgenden Komponenten auf einem Chip realisiert sind:
- die Extraktionseinheit,
- der Codebuchspeicher,
- der Referenzspeicher,
- der Vergleicher,
- die Ausleseeinheit,
- die Ermittlungseinheit.

14. Rechnereinheit nach einem der Ansprüche 10 bis 13, bei der die Rechnereinheit zur Wortermittlung eine Rechnereinheit eines Mobiltelefons ist.

15. Rechnereinheit nach einem der Ansprüche 10 bis 14, bei welcher der Referenzspeicher zusätzlich digitalisierte Telefonnummern speichert, die jeweils einem digitalisierten Wort zugeordnet sind.

16. Computerprogramm, welches in einen internen Speicher einer digitalen Rechnereinheit geladen werden kann, und welches Softwarecodeteile enthält, die geeignet sind, die Schritte nach einem der Ansprüche 1 bis 3, 7 bis 9 durchzuführen, wenn das Computerprogramm auf der Rechnereinheit ausgeführt wird.

17. Computerprogramm nach Anspruch 16, bei dem das Computerprogramm auf einem computerlesbaren Medium gespeichert ist.
